Europäisches Patentamt

European Patent Office

Office européen des brevets

(19)

(11) Veröffentlichungsnummer: **0 167 655**
**A1**

(12) **EUROPÄISCHE PATENTANMELDUNG**

(21) Anmeldenummer: **84108216.7**

(22) Anmeldetag: **12.07.84**

(51) Int. Cl.⁴: **F 16 F 1/38**

(43) Veröffentlichungstag der Anmeldung:
**15.01.86 Patentblatt 86/3**

(84) Benannte Vertragsstaaten:
**AT BE CH DE FR GB IT LI NL SE**

(71) Anmelder: **WOCO Franz-Josef Wolf & Co.**
**Sprudelallee 19**
**D-6483 Bad Soden-Salmünster(DE)**

(72) Erfinder: **Wolf, Franz-Josef**
**Sprudelallee 19**
**D-6483 Bad Soden-Salmünster(DE)**

(72) Erfinder: **Pietsch, Hubert**
**Am Quellenrain 13**
**D-6483 Bad Soden-Salmünster(DE)**

(74) Vertreter: **Jaeger, Klaus, Dr. et al,**
**JAEGER & PARTNER Patentanwälte Bergstrasse 48 1/2**
**D-8035 München-Gauting(DE)**

(54) **Gummilager.**

(57) Die erfindung betrifft ein Gummiradiallager (1) mit einer starren Innenhülse (2) und einer durchmessergrößeren, im unbelasteten Zustand etwa koaxial zur Inenhülse (2) vorgesehenen starren Außenhülse (3), zwischen denen ein im wesentlichen ringförmig zylindrisches Elastomerelement (4) mit Anbindung an die Innen- und Außenhülse vorgesehen ist und mit einer im Elastomerelement mit Abstand zur Innen- und Außenhülse eingebetteten Zwischenhülse (5). Bei derartigen Gummilagern, die drehrutschfest ausgebildet sein müssen, hat sich die relativ große radiale Vorspannung des Elastomerelementes gegen die Innenhülse als nachteilig erwiesen, da hierdurch insgesamt gesehen eine Erhöhung der Federsteifigkeit in radialer Richtung hervorgerufen wird, die teilweise noch durch einvulkanisierte starre Zwischenhülsen verstärkt wird. Zu einer weiche-

Fig. 2

EP 0 167 655 A1

25. April 1984

WOCO Franz-Josef Wolf & Co.
Postfach 20

6483 Bad Soden-Salmünster

WOC-139-EP
Hm/zi

---

Gummilager

---

B e s c h r e i b u n g

Die Erfindung betrifft ein Gummilager gemäß Oberbegriff des
Anspruches 1. Insbesondere betrifft die Erfindung ein Gummiradiallager, das zur Aufnahme eines Federdrehmomentes geeignet ist.

Herkömmliche Gummilager der vorgenannten Art weisen in der Regel
eine starr metallische Innenhülse auf, die koaxial und im radialen
Abstand von einer ebenfalls starren Außenhülse umgeben ist. Etwa
über die gesamte axiale Länge der beiden Hülsen ist zwischen der
Innen- und der Außenhülse ein Gummielement mit starker radialer
Vorspannung gegen die Innenhülse angeordnet. Über dieses Gummielement werden die beiden als Lager fungierenden Innen- bzw. Außenhülsen miteinander drehrutschfest und nach Möglichkeit drehelastisch
verbunden.

Hierbei hat sich gezeigt, daß es erforderlich ist, das Gummi-
bzw. Elastomerelement, das ringförmig zylindrisch ausgelegt
ist, zunächst mit sehr hoher radialer Vorspannung gegen die
Innenhülse auf diese aufzubringen. Anschließend wird die
Außenhülse so auf dem zylindrischen Elastomerelement aufgebracht, daß eine hohe radiale Einspannung des Elastomerelementes
gewährleistet ist. Da derartige Gummilager so ausgelegt sein
müssen, daß die beiden Hülsen letzten Endes drehfest, d.h. ohne
Schlupf oder Durchrutschen, miteinander verbunden sein
müssen, erfordert dies an der Außenmantelfläche der Innenhülse
aufgrund der kleineren Mantelfläche eine höhere radiale Vorspannung des Elastomers als an der Innenmantelfläche der durchmessergrößeren Außenhülse.

Mit anderen Worten soll zwischen der Innenhülse und der Außenhülse eine elastische Drehfestigkeit über das Elastomerelement
erreicht werden, was bedeutet, daß die Drehelastizität und
die Rückstellkraft allein durch das Elastomerelement erzeugt
werden müssen. Aufgrund der hohen Anbindungkraft, die an der
Außenmantelfläche der Innenhülse zur Erreichung der vorgenannten Drehfestigkeit erforderlich ist, wird das Elastomerelement
sehr stark gegen die Innenhülse vorgespannt. Zu dieser inneren
Vorspannung tritt beim Gummilager im Ruhezustand die weitere
radiale Einspannung des Elastomerelementes durch die Außenhülse.

Aus diesen Vorspannungs- bzw. Einspannungskräften resultiert
eine relativ hohe Federsteifigkeit des Elastomerelementes in
radialer Richtung, so daß das herkömmliche Gummilager besonders
in radialer Richtung schlechte Dämpfungseigenschaften besitzt,
d.h. derartige Lager sind im Hinblick auf die Schall- und
Schwingungsisolation verbesserungsbedürftig.

Eine Reduzierung der radialen Vorspannung des Elastomerelementes gegen die Innenhülse z.B. durch die stärkere Anbindung der inneren Mantelfläche des Elastomerelementes mittels einer Klebeverbindung an die Außenmantelfläche der Innenhülse, ist beim herkömmlichen Gummilager nicht gelungen, da die auf diesen Mantelflächen aufgebrachte Klebemasse durch die enorme Vorspannung des Elastomerelementes beim Aufbringen desselben auf die Innenhülse abgestreift bzw. ausgepresst wird, so daß im Endeffekt allein die radiale Vorspannung des Elastomerelementes zur Anbindung an die Innenhülse verbleibt. Die Möglichkeit, durch eine Flächenvergrößerung an der Außenmantelfläche der Innenhülse die erforderliche Anbindungskraft pro Flächeneinheit zumindest etwas herabzusetzen, wobei jedoch die relative Drehfestigkeit zwischen Innenhülse und Außenhülse gewährleistet sein muß, konnte nicht realisiert werden. Bei einer Vergrößerung der Außenmantelfläche der Innenhülse z.B. mittels eines im Radialschnitt zahnförmigen Profils, hat es sich gezeigt, daß bei kleinerer radialer Erstreckung dieses Zahnprofiles bei den auf das Gummilager einwirkenden Drehmomenten ein Überrutschen des Elastomerelementes über dieses Zahnprofil möglich ist. Die Drehfestigkeit der beiden Hülsen gegeneinander ist dadurch nicht mehr gewährleistet. Die Auslegung der Innenhülse mit einem radial relativ kleinen Zahnprofil trägt vielmehr durch das, wenn auch gelegentliche Überrutschen des Elastomerelementes über dieses Zahnprofil, zu einem höheren Verschleiß und Abrieb an der Innenmantelfläche des Elastomerelementes bei, so daß eine derartige Alternative nicht akzeptabel ist.

Andererseits ist man zur Erhöhung des Formfaktors k des Gummilagers den Weg gegangen, eine oder mehrere weitgehend starre Mittelhülsen koaxial in das Elastomerelement einzubetten.

Durch die Vergrößerung des Formfaktors k, der das Verhältnis von belasteter Gummifläche zur freien Gummifläche wiedergibt, wird eine Behinderung der Querdehnung des Elastomerelementes bei radialer Kraftbeaufschlagung erreicht. Insbesondere durch eine derartige Anordnung verbietet es sich, ein radial größeres Zahnungsprofil an der Außenmantelfläche der Innenhülse vorzusehen. Durch den formschlüssigen Verbund zwischen der Innenmantelfläche des Elastomerelementes und der vom Zahnprofil gebildeten Außenmantelfläche der Innenhülse wurde zwar die Drehsicherheit verbessert. Gleichzeitig aber wurde die Federsteifigkeit des Gummilagers in radialer Richtung noch wesentlich erhöht, da der Abstand zwischen den Maximas des Zahnprofiles und der im Elastomerelement eingebetteten Mittelhülse dadurch relativ klein wird. Hierdurch wird ein stoßartiges Auffangen von radial auf das Gummilager einwirkenden Kräften vor sich gehen, was unerwünscht ist und sehr rasch zu einer Abnutzung des Gummilagers führt.

Zur Auslegung des gattungsgemäßen Gummilagers ist daher zwischen der Innenhülse und dem Elastomerelement zur Erreichung der relativen Drehfestigkeit, d.h. keine rotative Bewegung an dieser Grenzfläche, bei einem maximal zulässigen Drehmoment eine maximale radiale Anbindungskraft bzw. eine daraus resultierende Reibungs- oder Tangentialkraft erforderlich. Sofern man diese Anbindungskraft nicht oder nicht vollständig durch das radiale Vorspannen des Elastomerelementes aufbringen will, muß dies durch das Einspannen des Elastomerelementes mittels der Außenhülse erfolgen. Hierbei hat sich jedoch gezeigt, daß die an der Innenhülse wirkende Anbindungskraft allein durch die Außenhülse nicht aufgebracht werden kann. Gerade bei der Einbettung einer geschlossenen und starren Mittelhülse im Elastomerelement, können die äußeren Einspannungskräfte des Elastomerelementes nicht auf die Grenzfläche zwischen Innenhülse und Elastomerelement übertragen werden. Die Fiktion, hier mit einer auch nur im engen Bereich durchmesservariablen Mittelhülse zu arbeiten, z.B. durch tangentiale oder zungenartige Überlappung der Endbereiche, verbietet sich durch die Schwächung des Elastomerelementes in diesem Bereich und durch die unweigerlich in diesem Überlappungsbereich vorhandene erhebliche Abnutzung des Elastomerelementes. Auch besteht bei einer derartigen fiktiven Lösung, sofern keine radialen Durchsetzungsbereiche des Elastomerelementes mit der starren Mittelhülse geschaffen werden, die Gefahr des Durchdrehens bzw. der rotativen Verschiebung des Elastomerelementes an den Grenzflächen zur Mittelhülse, so daß die Drehfestigkeit der inneren und äußeren Hülse gegeneinander nicht mehr gegeben ist.

Um daher bei einem bestimmten auf das Gummilager einwirkenden maximalen Drehmoment die Drehfestigkeit zwischen der Innenhülse und der Außenhülse zu gewährleisten, ist man bisher auf die hohe Anbindungskraft des Elastomerelementes an die Innenhülse angewiesen, wobei Kompromißmöglichkeiten, die jedoch anderweitige Nachteile mit sich bringen, denkbar sind. Unter dem Begriff "Drehfestigkeit" wird dabei eine durch die Elastizität des Elastomerelementes ermöglichte begrenzte, relative Rotationsbewegung der Innenhülse gegenüber der Außenhülse verstanden, so daß im entlasteten Zustand radial gegenüberliegende Punkte der Innen- und Außenhülse nach entsprechenden Belastungszyklen erneut radial gegeneinander zu liegen kommen.

Der Erfindung liegt daher, ausgehend vom vorgenannten Stand der Technik, die Aufgabe zugrunde, ein gattungsgemäßes Gummilager so auszubilden, daß bei gleicher effektiver Anbindungskraft des Elastomerelementes gegen die Innenhülse die Dämpfungseigenschaften, insbesondere in radialer Richtung, verbessert werden, wobei nach Möglichkeit die Drehelastizität des Elastomerelementes gefördert und tangentiale Scherkräfte im Elastomerelement möglichst klein gehalten werden sollen.

Diese Aufgabe wird bei einem gattungsgemäßen Gummilager durch die Merkmale des kennzeichnenden Teils des Anspruches 1 gelöst.

Der wesentliche Gedanke der Erfindung ist daher darin zu sehen, die vergleichbare Anbindungskraft zwischen dem Elastomerelement und der Innenhülse wie beim Stand der Technik nicht allein durch die radiale Vorspannung des Elastomerelementes aufzubringen, sondern diese Vorspannung zu reduzieren und dadurch die zusätzliche Möglichkeit einer Klebeverbindung oder damit gleichartige Anbindung an den Außenmantel der Innenhülse zu ermöglichen. Zur Realisierung wird bei der Erfindung eine vorzugsweise metallische Zwischenhülse längs eines Anordnungskreises im Elastomerelement eingebettet, wobei diese Zwischenhülse radial unter Veränderung ihrer geschlossenen Form kraftbeaufschlagbar ist, so daß diese Zwischenhülse in einem bestimmten Bereich unter Beibehaltung der formschlüssigen Einbindung im Elastomerelement durchmesservariabel ausgelegt ist. Vorzugsweise wird dies mit einem mäanderförmigen und insbesondere sinusförmigen Verlauf längs des entsprechenden Anordnungskreises erreicht. Besonders zweckmäßig ist es hierbei, die Zwischenhülse als Wellbuchse bzw. Wellrohrbuchse auszulegen, die gleich Amplitudenhöhen zwischen den radial inneren und radial äußeren Maximas und dem Anordnungskreis hat.

Bei dieser Konstruktion des Elastomerelementes des Gummilagers mit vorzugsweise einvulkanisierter Zwischenhülse, ist es möglich, im Vergleich zum Stand der Technik das Elastomerelement zunächst mit einer relativ geringen ggfl. sogar
keiner radialen Vorspannung an der Innenmantelfläche auf
die Außenmantelfläche der Innenhülse aufzubringen. Durch
diese geringe radiale Vorspannung des Elastomermaterials
kann zusätzlich auf der Anbindungsfläche eine Klebemasse
oder ein Haftungsmittel aufgebracht werden, ohne daß dieses
beim Aufbringen des Elastomerelementes von der Verbindungsfläche abgestreift, ausgepresst oder anderweitig entfernt
wird. Nachfolgend wird dann die Außenhülse so auf den Außenmantel des Elastomerelementes aufgebracht, daß hierdurch
eine radiale Einspannung des Elastomerelementes gegen die
Innenhülse erzeugt wird. Diese äußere radiale Einspannung
läßt sich durch die im bestimmten Bereich durchmesservariable, z.B. als Wellrohrbuchse ausgelegte weitgehend formstabile
und gewissermaßen etwas elastische Zwischenhülse auf die
Grenzfläche zur Innenhülse übertragen. Bei dieser radial
äußeren Einspannung wird der Anordnungskreis der Zwischenhülse insoweit durchmesserreduziert, daß eine gleich große
Anbindungskraft wie bei einem aus dem Stand der Technik her
bekannten gleichartigen Gummilager erreicht wird. Diese radiale Reduzierung der Zwischenhülse geht gerade bei sinusförmiger Auslegung formschlüssig mit dem Elastomermaterial
in diesem Bereich vor sich.

Da bei dem erfindungsgemäßen Gummilager die radial innere
Vorspannung gegen die Innenhülse erheblich reduziert werden
kann, wobei unter Verwendung eines Haftmittels jedoch die
gleiche Anbindungskraft an der Außenmantelfläche mit der
Innenhülse erreicht wird, weist dieses Gummilager eine geringere Federsteifigkeit in radialer Richtung auf, so daß
radiale Kräfte über einen längeren Federweg aufgefangen werden.

Dies führt letztlich zu einer verbesserten Schwingungs- und
Schallisolation und einer weicheren Dämpfung der auf das
Lager einwirkenden Radialkräfte.

Abhängig von der Wellentiefe der Zwischenhülse kann auch die
Drehelastizität des Lagers beeinflusst werden. Unter Wellungstiefe wird hierbei der radiale Abstand zwischen Maxima und
Minima z.B. eines sinusförmigen Verlaufs der Zwischenhülse
verstanden. Mit einer derartigen radial und tangential
Kräfte aufnehmenden Zwischenhülse kann daher sowohl eine
weichere radiale Dämpfungbei gleichbleibender Drehfestigkeit
an den Grenzflächen zur Innen- bzw. Außenhülse erreicht werden. Desweiteren kann durch diese Zwischenhülse aber auch
die Drehelastizität im gewünschten Sinne unter Berücksichtigung des Formfaktors k ausgelegt werden.

Die Zwischenhülse wird vorzugsweise so ausgelegt, daß sie
im Radialschnitt einenstetigen  Verlauf aufweist. Neben der
besonders zweckmäßigen sinusförmigen Wellung längs des Anordnungskreises, können auch Vieleckkonfigurationen, die
sich ja im stetigen  Verlauf annähern, oder auch Trapezkonfigurationen mit breiterer, radial innen liegender Basis
gewählt werden. Im einfachsten Fall ist auch eine Rechteckform möglich. Wesentlich bei diesen Konfigurationen ist,
daß sowohl bei radialer wie tangentialer Krafteinwirkung
auf die Zwischenhülse die weitgehend formschlüssige Verbindung mit dem umgebenden Elastomermaterial erhalten bleibt.

Der fiktive Anordnungskreis der Zwischenhülse liegt vorzugsweise nicht auf dem Mittelkreis des ringförmigen Elastomerelementes, sondern weist eine geringfügige radiale Versetzung nach außen in Richtung zur Außenhülse auf. Hierdurch
wird sichergestellt, daß ein ausreichender Abstand zwischen der Außenmantelfläche der Innenhülse und den radial innersten Bereichen der Zwischenhülse gegeben ist, so daß der
maximale Federweg im radial inneren Bereich des Elastomerelementes vergrößert wird.

Zur Verbesserung der Anbindungskraft zwischen der Außenhülse und dem Elastomerelement kann auch die Grenzfläche in
diesem Bereich zusätzlich zum Einspannen des Elastomerelementes mit einer Klebebefestigung ausgestattet werden. Hierdurch wird die flächenbezogene Anbindungskraft zwischen
Außenhülse und dem Elastomerelement verbessert.

Im Gegensatz zum Stand der Technik erreicht die Erfindung
daher auch ohne Zahnungsprofil an der Außenmantelfläche der
Innenhülse eine mit bekannten Gummilagern gleiche bzw. vergleichbare Anbindungskraft in diesem Bereich, so daß eine
Materialbeeinträchtigung z.B. infolge eines Abriebes in diesem Bereich vermieden wird. Der Anordnungskreis für die
Zwischenhülse ist in Abstimmung mit deren Wellungstiefe
vorzugsweise so im Elastomerelement, koaxial zur Achse des
Gummilagers vorgesehen, daß die Wellungstiefe der Zwischenhülse in etwa dem radialen Abstand zwischen der Außenmantelfläche des Elastomerelementes und den radial äußeren Maximas der im Elastomerelement einvulkanisierten Zwischenhülse entspricht. Hierdurch ist sowohl im Hinblick auf die
Drehelastizität des Gummilagers ein nahezu optimaler, radial
relativ tiefer Eingriff des Elastomermaterials mit der
Wellungsform der Zwischenhülse gegeben, als auch die radiale
Verformbarkeit der Zwischenhülse in einem weiten Bereich
sichergestellt.

Die Zwischenhülse selbst besteht zweckmäßigerweise aus einem
in das Elastomerelement gut einvulkanisierbare Metall. Sie kann jedoch auch aus einem formstabilen Kunststoff bestehen. Die geschlossene Form der Zwischenhülse z.B. als Wellrohrbuchse läßt sich z.B. als nahtlos gezogenes Rohr, in Form einer Kaltwellung, oder durch Verschweißen der Endbereiche, miteinander realisieren.

Der erfindungsgemäße Gedanke, die Zwischenhülse in Art einer Wellrohrbuchse auszulegen, ermöglicht es somit, die radial innere Vorspannung des Elastomerelementes erheblich zu reduzieren, so daß das Gummilager insgesamt gesehen eine weichere radiale Dämpfung aufweist. Die gleichmäßige Verformbarkeit der Zwischenhülse insbesondere bei der statischen Einbaubelastung, d.h. dem Einspannen des Elastomerelementes durch das Aufbringen der Außenhülse, mit der Durchmesserreduzierung des fiktiven Anordnungskreises und der nach radial innen gerichteten gleichmäßigen Verformung der Zwischenhülse, stellt jedoch die vollflächige formschlüssige Verbindung mit dem Elastomermaterial sowohl im unbelasteten wie auch im belasteten Zustand her. Hierdurch wird neben der weicheren Dämpfung auch eine wesentlich höhere Lebensdauer und größere Haltbarkeit des erfindungsgemäßen Gummilagers im Vergleich mit einem Gummilager gemäß dem Stand der Technik erreicht.

Ein derartiges Gummilager, mit drehrutschfester Anbindung der Innen- und Außenhülse über das mit einer verformbaren Zwischenhülse versehene Elastomerelement, eignet sich besonders für schwingungsisolierende Aufhängungen mit relativ großem Verdrehwinkeln der beiden Lagerhülsen gegeneinander, wie sie beispielsweise bei der Federpaketlagerung in Lastkraftwagen auftreten. Hierbei erreicht das erfindungsgemäße Gummilager durch die Einbettung der Zwischenhülse auch einen Formfaktor k, wie er im Stand der Technik durch das Einvulkanisieren von einer starren, zylindrischen Mittelhülse erreicht wird.

Mit anderen Worten wird beim erfindungsgemäßen Gummilager
eine wesentlich flacher verlaufende Federkennlinie erreicht,
d.h. bei gleicher auf das Gummilager einwirkenden radialen
Federkraft wird der Federweg erheblich vergrößert, so daß
insgesamt gesehen eine weichere Federdämpfung erreicht wird.
Bei einer sinusförmigen Auslegung der Zwischenhülse wird
der Winkel am Schnittpunkt mit dem fiktiven Anordnungskreis
zwischen dem Radius und dem Sinusverlauf etwa im Bereich von
30° gewählt. Hierdurch werden auch im Schnittbereich mit dem
Anordnungskreis radial einwirkende Kräfte auch in diesem Bereich in tangentiale Verschiebungskraftkomponenten
aufgespalten. Die Auslegung der Zwischenhülse als Wellrohrbuchse erlaubt es daher vorteilhaft, daß im Prinzip keine
Spannungsdifferenz zwischen dem Wellrohr und dem dieses umgebende Elastomermaterial auftritt, so daß trotz dieser Einbettung eine nahezu homogene gleichmäßige Verformbarkeit
des Elastomerelementes möglich ist. Bei dieser Konzeption des
Elastomerelementes kann die an der Innenhülse wirkende Anbindungskraft nahezu allein, zumindest aber ergänzend, durch
die äußere Einspannung mit der Außenhülse aufgebracht werden.
Vorzugsweise kann bei vorhandener radialer Vorspannung des
Elastomerelementes die erforderliche Anbindungskraft an der
Grenzfläche zur Innenhülse etwa zur Hälfte durch die Vorspannung und zur anderen Hälfte durch die Anbindungskräfte
mit Hilfe des vorhandenen Haftmittels realisiert werden.

Die Erfindung wird nachstehend anhand schematischer Zeichnungen
beispielhaft noch näher erläutert. Es zeigen:

Fig. 1        einen Axialschnitt durch eine Prinzipdarstellung des erfindungsgemäßen Gummilagers
              mit Innen- und Außenhülse;

Fig. 2        einen Radialschnitt durch ein Gummilager nach

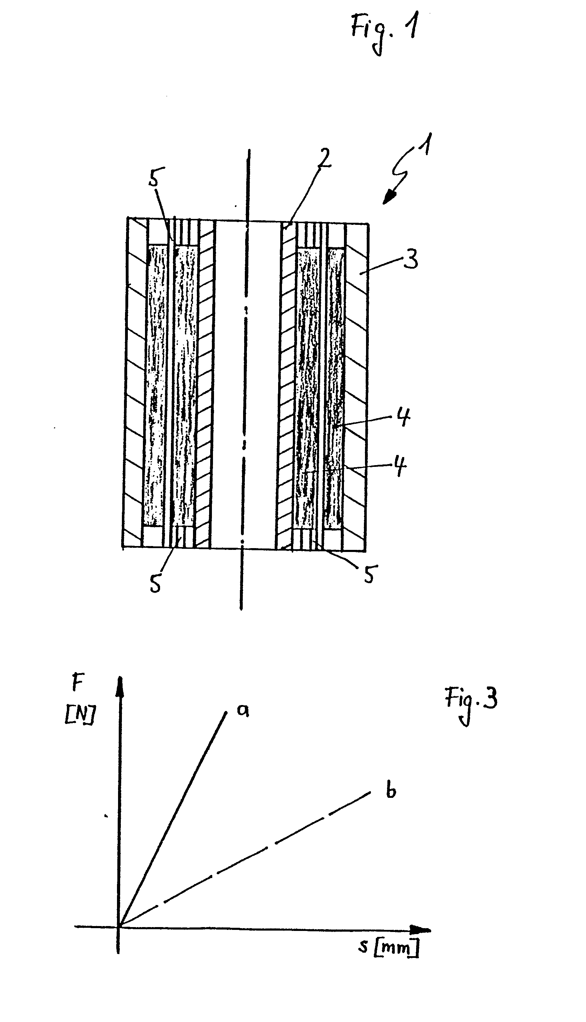

              Fig. 1 mit einer Sektordarstellung von 90°,
              in dem eine      Wellbuchse als Zwischenhülse
              angeordnet ist, und

Fig. 3        den schematischen Verlauf der Federkennlinie
              nach dem Stand der Technik (a) und der Erfindung (b).

Das Gummilager gemäß Figur 1 besteht im wesentlichen aus einer
starren, metallischen Innenhülse 2, die eine relativ glatte
zylindrische Außenmantelfläche 7 aufweist. Koaxial zur Achse
des gesamten Gummilagers 1 ist eine ebenfalls starre Außenhülse 3 mit wesentlich größerem Innendurchmesser als der Außendurchmesser der Innenhülse 2 vorgesehen. Zwischen der Innenhülse 2 und der Innenmantelfläche der Außenhülse 3 ist in
Fig. 1 ein ringförmig zylindrisches Elastomerelement 4 eingespannt und mit den Grenzflächen der Hülsen 2 bzw. 3 verklebt.
Etwa im Bereich des mittleren Radius des Elastomerelementes 4
ist eine im wesentlichen formstabile Zwischenhülse 5, z.B. aus
einem Metall, einvulkanisiert, wobei diese Zwischenhülse 5
ebenfalls koaxial zu den beiden innen  bzw. außen angeordneten Hülsen 2 bzw. 3 eingebettet ist. Die axialen Stirnflächen
der Innen-, Zwischen- und Außenhülse überragen in axialer
Richtung die entsprechenden Stirnflächen des Elastomerelementes
zumindest geringfügig, so daß auch bei stärkerer radialer Belastung des Gummilagers und der dadurch bedingten axialen
Verformung  des Elastomerelementes nach außen, eine Beschädigung dieser Bereiche des Elastomerelementes verhindert wird.

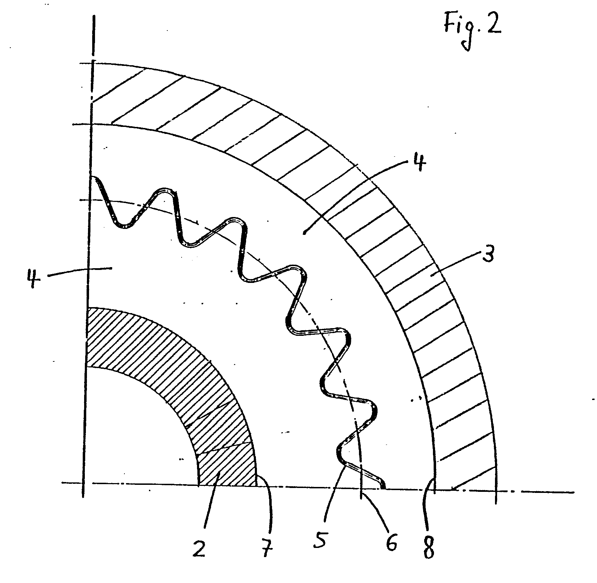

In der Darstellung nach Fig. 2 ist das in Fig. 1 im Prinzip gezeigte Gummilager im Radialschnitt und mit einem Sektorausschnitt von 90° in etwas vergrößertem Maßstab gezeigt. In dem zwischen der Innenhülse 2 und der Außenhülse 3 eingespannten Elastomerelement 4 ist in gleichmäßiger Anordnung um und entlang eines fiktiven Anordnungskreises 6, der koaxial zur Achse des Lagers vorgesehen ist, eine Zwischenhülse 5 mit etwa sinusförmigem Verlauf angeordnet. Der Anordnungskreis 6 ist dabei geringfügig gegenüber dem mittleren Durchmesser des Elastomerelementes in Richtung nach radial außen zur Außenhülse 3 versetzt, wobei jedoch ein ausreichend großer Abstand zwischen den radial äußeren Maximas der Zwischenhülse und der Innenmantelfläche 8 der Außenhülse 3 verbleibt.

Die Herstellung dieses Gummilagers kann folgendermaßen durchgeführt werden. Die als Wellbuchse ausgebildete, insbesondere einstückige und nahtlose Zwischenhülse 5 wird in dem ringförmigen zylindrischen Elastomerelement 4 einvulkanisiert. Hierbei kann das Elastomerelement eine nach radial innen gerichtete Vorspannung aufweisen, die jedoch bedeutend geringer ist als die im Stand der Technik bekannte und erforderliche Vorspannung. Aufgrund der geringeren radial nach innen gerichteten Vorspannung kann nunmehr erfindungsgemäß auch additiv auf der Grenzfläche zwischen Außenmantel 7 der Innenhülse 2 und der Innenmantelfläche des Elastomerelementes 4 eine Klebemasse aufgebracht werden, die die Anbindungskraft des Elastomerelementes 4 mit der Innenhülse verstärkt. Anschließend wird das Elastomerelement 4 durch die aufgebrachte Außenhülse 3 von radial außen zusätzlich eingespannt. Hierbei ermöglicht die radiale und tangentiale Verformbarkeit der Zwischenhülse 5 mit einer Durchmesserreduzierung des entsprechenden Anordnungskreises 6 die Übertragung der äußeren Einspannung auf den Bereich der Anbindungsfläche zwischen dem Elastomerelement 4 und der Innenhülse 2, so daß hierdurch die innere, kritische Anbindungskraft erhöht wird.

Insgesamt gesehen bedarf es daher keiner übermäßig großen Vorspannung des Elastomerelementes, da die erforderliche Anbindungskraft an der Innenhülse 2 durch die Außenhülse 3 über die Verformbarkeit der Zwischenhülse 5 aufgebracht bzw. additiv ergänzt werden kann. Das Elastomerelement 4 weist daher bei gleicher effektiver Anbindungskraft an der Innenhülse in radialer Richtung eine geringere Federsteifigkeit auf, so daß zusätzlich zur verbesserten drehrutschfesten Anbindung der beiden Hülsen relativ zueinander eine weichere Dämpfungskennlinie in radialer Richtung erreicht wird.

In der Fig. 3 ist schematisch die Federkennlinie des erfindungsgemäßen Gummilagers durch die Gerade b und eine entsprechende Federkennlinie bei einem Gummilager nach dem Stand der Technik durch die Gerade a dargestellt. Mit anderen Worten wird beim erfindungsgemäßen Gummilager bei gleicher in radialer Richtung auf das Lager einwirkenden Federkraft F ein wesentlich größerer Federweg s erzielt, so daß im Vergleich zum Stand der Technik eine bessere Schwingungs- und Schallisolation auch bei kleinen Frequenzen erreicht wird.

**JAEGER & PARTNER**

PATENTANWÄLTE

25. April 1984

0167655

WOCO Franz-Josef Wolf & Co.
Postfach 20

6483 Bad Soden-Salmünster

WOC-139-EP
Hm/zi

---

Gummilager

---

A n s p r ü c h e

1. Gummilager, insbesondere Gummiradiallager, das zur Aufnahme
   eines Federdrehmomentes geeignet ist,
   mit einer starren Innenhülse und einer durchmessergrößeren,
   in unbelastetem Zustand etwa koaxial zur Innenhülse vorgesehenen starren Außenhülse, zwischen denen ein im wesentlichen
   ringförmig zylindrisches Elastomerelement mit Anbindung an
   die Innen- und Außenhülse vorgesehen ist und
   mit einer im Elastomerelement mit Abstand zur Innen- und
   Außenhülse eingebetteten Zwischenhülse,
   dadurch  g e k e n n z e i c h n e t,
   daß die Zwischenhülse (5) im Radialschnitt eine ringförmig
   geschlossene Form aufweist, die längs ihres fiktiven Anordnungskreises (6) mit einer größeren Abwicklungsstrecke als
   der Anordnungskreis so vorgesehen ist, daß radial und/oder

BERGSTRASSE 48½ · D-8035 MÜNCHEN-GAUTING
TELEPHON: (089) 850 2030 · TELEX: 521777 Isar d

tangential zum Anordnungskreis wirkende Kraftkomponenten aufnehmbar sind, und
daß mindestens die Innenmantelfläche des Elastomerelementes (4)
auf bzw. mit der Außenmantelfläche (7) der Innenhülse (2) additiv klebefixiert ist.

2. Gummilager nach Anspruch 1,
   dadurch  g e k e n n z e i c h n e t,
   daß die Zwischenhülse (5) als geschlossenes Wellrohr ausgebildet ist, das das Elastomerelement (4) im wesentlichen koaxial
   durchsetzt.

3. Gummilager nach Anspruch 2,
   dadurch  g e k e n n z e i c h n e t,
   daß die Zwischenhülse (5) um den und entlang des Anordnungskreises
   (6) einen etwa sinusförmigen Verlauf aufweist.

4. Gummilager nach einem der Ansprüche 1 bis 3,
   dadurch  g e k e n n z e i c h n e t,
   daß das Elastomerelement (4) und die Außenhülse (3) miteinander
   additiv klebefixiert sind.

5. Gummilager nach einem der Ansprüche 1 bis 4,
   dadurch  g e k e n n z e i c h n e t,
   daß der Anordnungskreis(6)der Zwischenhülse (5) einen größeren
   Radius als der mittlere Radius des Elastomerelementes (4) aufweist.

6. Gummilager nach einem der Ansprüche 1 bis 5,
   dadurch  g e k e n n z e i c h n e t,
   daß die Zwischenhülse (5) formschlüssig in das Elastomerelement
   (4) einvulkanisiert ist.

7. Gummilager nach einem der Ansprüche 1 bis 6,
   dadurch  g e k e n n z e i c h n e t ,
   daß die Außenmantelfläche (7) der Innenhülse (2) als Kreismantelfläche ausgebildet ist.

8. Gummilager nach einem der Ansprüche 1 bis 7,
   dadurch  g e k e n n z e i c h n e t ,
   daß die Zwischenhülse (5) im Elastomerelement ( 4) so angeordnet ist, daß die Differenz (Wellungstiefe) zwischen minimalem
   und maximalem Radius der Zwischenhülse (5) etwa dem kleinsten
   Radiusabstand der Zwischenhülse (5) von der Außenmantelfläche
   des Elastomerelementes (4) entspricht.

9. Gummilager nach einem der Ansprüche 1 bis 8,
   dadurch  g e k e n n z e i c h n e t ,
   daß die Innenhülse (2) und die Außenhülse (3) über das Elastomerelement (4) mit integrierter Zwischenhülse (5) miteinander
   drehfest aber drehelastisch verbunden sind.

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 089 844 (EHRENREICH) <br> * Seite 1, rechte Spalte, Absatz 3 - Seite 2, linke Spalte, Absatz 1; Seite 2, linke Spalte, Absatz 6; Figuren 1,7,8 * | 1-3,6 | F 16 F .1/38 |
| A | | 4,5,7, 9 | |
| | --- | | |
| Y | FR-A- 683 950 (ANTELME) <br> * Insgesamt * | 1-3,6 | |
| | --- | | |
| A | FR-E- 47 907 (HOUDAILLE) <br> * Insgesamt * | 1,3,6 | |
| | --- | | |
| E | EP-A-0 132 502 (JÖRN) <br> * Ansprüche 1,7; Figuren 6,7 * | 1,6,7 | RECHERCHIERTE SACHGEBIETE (Int. Cl.4) |
| | --- | | |
| A | CH-A- 368 662 <br> (GELENKWELLENBAU) | | F 16 F <br> F 16 C <br> B 60 G |
| | --- | | |
| A | FR-A-1 226 415 (HAPP) | | |
| | --- | | |
| A | FR-A-1 110 285 (FREYSSINET) | | |
| | --- | | |
| A | US-A-2 873 110 (JONSSON) | | |
| | ---                    -/- | | |

Der vorliegende Recherchenbericht wurde für alle Patentansprüche erstellt.

| Recherchenort <br> DEN HAAG | Abschlußdatum der Recherche <br> 26-03-1985 | Prüfer <br> ESPEEL R.P. |
|---|---|---|

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-1 668 178 (WEINHARDT) | | |

- - - - -

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 26-03-1985 | Prüfer ESPEEL R.P. |
|---|---|---|